(19) Europäisches Patentamt
European Patent Office
Office européen des brevets

(11) EP 0 851 524 B1

(12) **EUROPEAN PATENT SPECIFICATION**

(45) Date of publication and mention of the grant of the patent:
**14.06.2000 Bulletin 2000/24**

(51) Int Cl.[7]: **H01M 10/40**

(21) Application number: **97122851.5**

(22) Date of filing: **23.12.1997**

(54) **Non-aqueous electrolyte secondary cell**

Sekundärbatterie mit nichtwässrigem Elektrolyten

Pile secondaire à électrolyte non-aqueux

(84) Designated Contracting States:
**DE FR GB**

(30) Priority: **27.12.1996 JP 35110496**

(43) Date of publication of application:
**01.07.1998 Bulletin 1998/27**

(73) Proprietor: **SONY CORPORATION**
**Tokyo (JP)**

(72) Inventors:
- **Omaru, Atsuo, c/o Sony Energytec,INC Koriyama, Fukushima-ken (JP)**
- **Nagamine, Masayuki, c/o Sony Energytec INC Koriyama, Fukushima-ken (JP)**
- **Yamaguchi, Akira, c/o Sony Energytec INC Koriyama, Fukushima-ken (JP)**

(74) Representative: **Müller, Frithjof E., Dipl.-Ing. et al**
**Patentanwälte**
**MÜLLER & HOFFMANN,**
**Innere Wiener Strasse 17**
**81667 München (DE)**

(56) References cited:
**EP-A- 0 347 952** **EP-A- 0 418 514**

- **PATENT ABSTRACTS OF JAPAN vol. 014, no. 502 (E-0997), 2 November 1990 & JP 02 207464 A (SHOWA DENKO KK;OTHERS: 01), 17 August 1990,**
- **PATENT ABSTRACTS OF JAPAN vol. 014, no. 502 (E-0997), 2 November 1990 & JP 02 207465 A (SHOWA DENKO KK;OTHERS: 01), 17 August 1990,**
- **PATENT ABSTRACTS OF JAPAN vol. 015, no. 345 (C-0864), 3 September 1991 & JP 03 137010 A (SONY CORP), 11 June 1991,**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 851 524 B1

## Description

## BACKGROUND OF THE INVENTION

### 1. Field of the Invention

The present invention relates to a non-aqueous electrolyte secondary cell, particularly, to improvement of a non-aqueous solvent.

### 2. Description of the Prior Art

Small-sized and light electronic instruments have been realized by the progress of recent remarkable electronic technology. With the progress, it has been demanded to make a cell small and light and making energy density high for the cell as a portable electric source more and more.

Conventionally, aqueous cells including a lead, a nickel and cadmium cell and so on are the main current as secondary cells for a general use. Though these aqueous secondary cells are satisfactory in a cycle characteristic to some extent, the characteristic is not satisfactory in weight of the cell and in energy density.

On one hand, recently, a non-aqueous electrolyte secondary cell in which lithium or a lithium alloy are used for the negative electrode has been popularly studied and developed. This cell has a high energy density by using a composite oxide including Li such as $LiCoO_2$ as a positive electrode, and has superior characteristics in that self-discharging is little and weight is light.

However, in the non-aqueous electrolyte secondary cell in which Li or Li alloys are used as the negative electrode, with the progress of charging/discharging cycles, lithium grows up as a dendrite crystal, it reaches the positive electrode and an inner short might occur. Further, as the dendrite crystal is promoted to be created, there is a problem in that it is impossible to practically and rapidly charge and discharge. For this reason, it is hard to make the non-aqueous electrolyte secondary cell in which Li or alloys of Li are used as the negative electrode practicable.

In order to solve the problems, a non-aqueous electrolyte secondary cell (the lithium ion secondary cell) of the so-called rocking chair type in which layered compounds of oxides and carbon and so on in which lithium ions are taken are used as the negative material is noticed.

In this non-aqueous electrolyte secondary cell, when it is used for reaction of the negative electrode in which lithium is doped/dedoped between layers of these layered compounds, even if the charging/discharging cycle is progressed, dendritic deposition is not recognized and a good charging/discharging cycle is shown.

It is known from Patent Abstracts of Japan, vol. 14, no. 502 (E-0997), 1990 (JP 02207465A and JP 02207464A), to provide a non-aqueous secondary battery, wherein the electrolyte contains a non-aqueous solvent comprising at least 30 vol. % of anisole or an alkyl derivative thereof or of m-trifluoromethyl anisole.

From EP 0 418 514 A1 there is known a non-aqueous secondary cell having a large doping capacity for lithium. The cell comprises anisole in combination with a lithium salt as the electrolyte and a Li containing cathode.

Further, it is known from EP 0 347 952 A2 to use a combination of anisole and a further organic solvent together with a sodium salt as an electrolyte in a non-aqueous secondary battery.

Though each kind of carbon materials possible to be used for the negative material of the non-aqueous electrolyte secondary cell can be used, the carbon materials that have been made practicable as the negative materials at first are graphitization retardant carbon materials, that is, low crystalline carbon materials obtained by executing thermal treatment to organic materials at comparatively by low temperatures. A non-aqueous electrolyte secondary cell in which a negative electrode formed by those graphitization retardant carbon materials is combined with an electrolyte in which propylene carbonate (PC) is the main solvent has already been produced.

Further, recently, it has also become possible to use the kinds of graphite in which a crystal structure has been developed. However, in case of the use of these kinds of graphite, if PC is used as the main solvent, it is dissolved, so that it was a problem that these kinds of graphite are the negative electrode materials. However, the problem has been solved by making ethylene carbonate (EC) which is very stable the main solvent and it has been possible to use them as the negative materials.

It is possible to obtain comparatively easily the kinds of scaly graphites, and they have been widely used as a conductive agent for alkali cells and so on as usual. These kinds of graphites are highly crystalline and have high actual density comparing to graphitization retardant carbon materials. Therefore, if the negative electrode is formed by these kinds of graphites, it is possible to obtain high electrode charging characteristics and energy density of the cell is advanced. Therefore, these kinds of graphites are the materials which are largely expected as the negative electrode material.

## OBJECT AND SUMMARY OF THE INVENTION

In a lithium ion secondary cell, the following potential state is caused by charging.

That is, as a positive material, composite oxides including Li for which $LiCoO_2$ is representative as mentioned above are used. In composite oxides containing Li, Li ions are taken out in charging, and the potential becomes the high potential of about 4.2 V. On one hand, in the carbon material of the negative electrode material, the Li ions are doped and the potential approaches the potential of Li metal.

Therefore, in this cell, a positive electrode is very easily oxidized and a negative electrode is very easily reduced. When the cell is preserved under the condition of charging, some irreversible reaction occurs in the electrodes during charging, and there is a problem in that a capacity degradation which is not recovered is caused.

The present invention is proposed considering the conventional actual situation, and an object of the present invention is to provide a non-aqueous electrolyte secondary cell by which it is possible to control the irreversible capacity degradation which is caused when it is preserved under the condition of charging.

The inventors of the present invention examined in earnest in order to achieve the object as mentioned above, and as a result, we knew that it is possible to control the capacity degradation due to the irreversible reaction caused when preserved under the condition of charging by adding hologenated monomethoxy benzene class compounds of a specific concentration to the electrolyte.

The non-aqueous electrolyte secondary cell according to the present invention has been completed based on such knowledge, and the non-aqueous electrolyte secondary cell is characterized by having a negative electrode that is capable to dope/dedope lithium, a positive electrode and a non-aqueous electrolyte which electrolyte is dissolved in a non-aqueous solvent, wherein at least one of the monomethoxy benzene class compounds shown by Chemical Formulas 1, 2 and 3 is added to the non-aqueous electrolyte as above mentioned at a concentration of from 0.005 to 0.9 M.

**Formula 1**

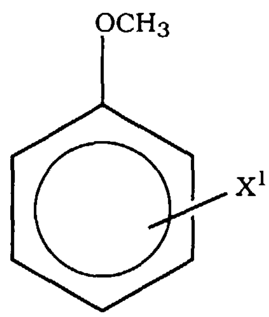

where $X^1$ is a halogen element

**Formula 2**

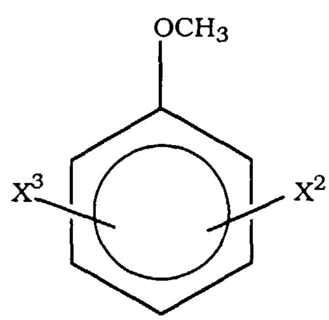

where $X^2$ and $X^3$ are halogen elements

**Formula 3**

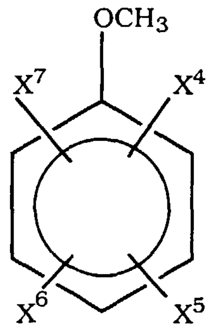

where $X^4$, $X^5$, $X^6$ and $X^7$ are halogen elements

In the non-aqueous electrolyte secondary cell, the positive electrode is more than 4 V under the condition of charging, it is the high potential, the negative electrode approaches to a lithium cell and both of them are under the condition of occurring irreversible reaction.

Then, when the monomethoxy benzene class compounds into which halogen elements are introduced shown by Chemical Formulas 1, 2 and 3 are added to the non-aqueous electrolyte, the irreversible reaction of the positive and the negative electrode is controlled and capacity degradation that is not recovered is prevented.

## BRIEF DESCRIPTION OF THE DRAWINGS

**Fig. 1** is a schematic view showing an example of a form of a particle of graphite.

**Fig. 2** is a schematic view showing another example of a form of a particle of graphite.

**Fig. 3** is a longitudinal cross section showing a structural example of a non-aqueous electrolyte secondary cell according to the present invention.

**Fig. 4** is a diagram showing the relation between addition of the halogenated monomethoxy benzene and capacity of the cell.

**Fig. 5** is a diagram showing the relation between addition of the halogenated monomethoxy benzene and charging/discharging efficiency.

**Fig. 6** is a diagram showing the relation between addition of the halogenated monomethoxy benzene and maintenance factor.

## DETAILED DESCRIPTION OF THE INVENTION

Specific embodiments of the present invention will be described.

A non-aqueous electrolyte secondary cell according to the present invention includes a negative electrode that is capable to dope and dedope lithium, a positive electrode and a non-aqueous electrolyte which electrolyte is dissolved in a non-aqueous solvent.

In the present invention, the monomethoxy benzene class compounds into which halogen elements are introduced as shown by Chemical Formulas 1, 2 and 3 are added to the non-aqueous electrolyte of the non-aqueous electrolyte secondary cell.

**Formula 1**

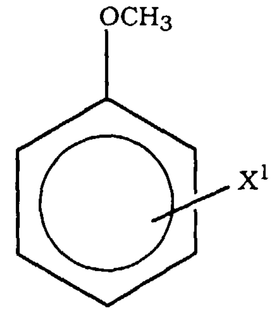

where $X^1$ is a halogen element

**Formula 2**

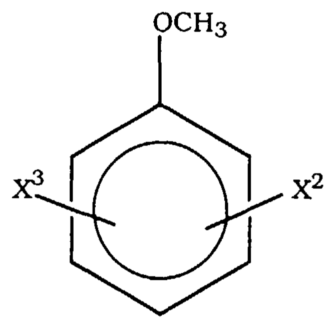

where $X^2$ and $X^3$ are halogen elements

**Formula 3**

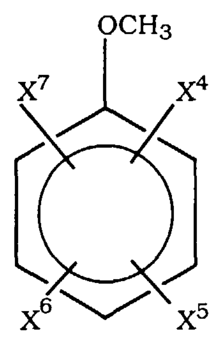

where $X^4$, $X^5$, $X^6$ and $X^7$ are halogen elements

When the halogenated monomethoxy benzene class compounds as mentioned above are added to the non-aqueous electrolyte, irreversible reactions of the positive and the negative electrode caused in preserving under the condition of charging are controlled and capacity degrading which is not recovered is prevented.

In this additive, it is important that the number of methoxy groups introduced into a benzene ring is one. When more than two methoxy groups are introduced into the benzene ring, the molecule becomes large and the characteristic as the electrolyte such as ion conductivity is spoiled. Further, the effectiveness for controlling capacity degrading is not enough.

In the monomethoxy benzene class compounds shown by Chemical Formulas 1, 2 and 3, halogen elements X are Cl, Br, F and so on, F is the most preferable of them and next Br is preferable. Positions into which halogen

elements X are introduced are not particularly limited.

Further, only one monomethoxy benzene class compound or a combination of plural kinds of monomethoxy benzene class compounds may be used.

Though proper addition of the monomethoxy benzene class compounds depends on the kinds of compounds, it is preferably from 0.005 to 0.5 M, more preferably, from 0.005 to 0.9 M. When the addition is too small, it is impossible to obtain sufficiently the effectiveness for controlling the capacity degradation. Further, when the addition is too large, conductivity of the electrolyte drops and particularly the characteristic at low temperature is spoiled.

Though the monomethoxy benzene class compounds are added to the electrolyte according the present invention, it is possible to use any other compositions of electrolyte usually used in this kind of non-aqueous electrolyte secondary cells.

As the non-aqueous solvent, it is preferable to use a solvent such as ethylene carbonate in which permittivity is comparatively high as the main solvent and solvents which plural solvents of low viscosity are added are used.

As the high permittivity solvents, it is possible to use propylene carbonate (PC), butylene carbonate (BC), vinylene carbonate (VC), sulfolane, butyrolactone, valerolactone and so on as well as ethylene carbonate (EC).

As the low viscosity solvents, it is possible to use symmetrical chain carbonic esters including diethyl carbonate and dimethyl carbonate and so on, asymmetrical chain carbonic esters including methyl ethyl carbonate, methyl propyl carbonate and so on, carboxylic esters including methyl propionate, ethyl propionate and so on, or phosphoric esters including trimethyl phosphate, triethyl phosphate and so on. Only one kind or combinations of more than two kinds of them may be used.

However, as it is hard to dissolve by graphite comparatively other solvents of high permittivity in case of using the graphite material as the negative electrode, it is preferable to use ethylene carbonate or a compound in which a hydrogen atom of ethylene carbonate is substituted by halogen as the main solvent.

Even if reactive to graphite as propylene carbonate, it is possible to use such solvents if adding a solvent as ethylene carbonate or halogenide of ethylene carbonate as the main solvent and materials by which part of it is substituted as second component solvents. Particularly, the compound of monomethoxy benzene class compounds is added to the electrolyte and it acts to control reaction between the graphite material and the solvent; therefore, it is possible to set comparatively more addition of propylene carbonate.

As compounds used for the second component solvents, it is preferable to use butylene carbonate, vinylene carbonate, 1,2-dimethoxy ethane, 1,2-dimethoxy methane, γ-butyrolacton, valerolactone, tetrahydrofuran, 2-methyltetrahydrofuran, 1,3-dioxyfuran, 4-methyl-1,3-dioxolan, sulfolan, methylsulfolan and so on as well as propylene carbonate. It is preferable to use the carbonic ester class solvents of propylene carbonate, butylene carbonate, vinylene carbonate and so on. It is preferable that the addition of them is from 20 to 40 vol. %.

As electrolyte salts which are dissolved in the non-aqueous solvents, it is possible to use any used for this kind of cell. Specifically, $LiPF_6$, $LiClO_4$, $LiAsF_6$, $LiBF_4$, $LiB(C_6H_5)_4$, $CH_3SO_3Li$, $CF_3SO_3Li$, $LiN(CF_3SO_2)_2$, $LiC(CF_3SO_2)_3$, LiCl, LiBr and so on are given. It is possible to use only a kind of these salts and plural kinds of these salts. In case of using them in combination, it is preferable that $LiPF_6$ is the main component.

On one hand, it is possible to use the following materials as the negative and the positive electrode of the cell.

First, as the negative electrode materials, the carbon materials that are capable to dope or dedope lithium ions and crystalline or non-crystalline metallic chalcogenized compounds can be used.

As the carbon material of them, it is possible to use carbon material easy to graphitize, non-graphitizable carbon material and graphite material.

As the non-graphitizable carbon material, the material having material parameters where the (002) surface interval is more than 0.37 nm, the actual density is less than 1.70 g/cm$^3$ and an exothermic peak is not higher than 700 °C in the differential thermal analysis (DTA) in a current of air is preferable.

The non-graphitizable carbon material as mentioned above is obtained by executing heat treatment at the temperature of 1000 °C to an organic material.

As representatives of organic materials, the homopolymer and the copolymer of furfuryl alcohol and furfural, or furan resin copolymerized with other resins and so on are given.

Further, it is possible to use conjugated phenol resin, acrylic resin, vinyl resin halide, polyimide resin, polyamideimide resin, polyamide resin, polyacetylene, conjugated system resin of poly(p-phenylene) and so on, cellulose, derivatives of cellulose, and arbitrary organic high molecular compounds.

The material where a functional group including oxygen is introduced (a so-called oxygen bridge) into an oil pitch having a specific H/C atomic ratio, similarly to the furan resin as mentioned above, is not melted in the process for carbonizing (higher than 400 °C) and becomes finally a non-graphitizable carbon material at the solid phase state.

The oil pitch is obtained by processes of distillation (vacuum, atmospheric and steam distillation), thermal polymerization/condensation, extraction, chemical polymerization/condensation and so on from kinds of tar obtained by high temperature thermal decomposition of coal tar, ethylene bottom oil, crude oil and so on and asphalt. Then, the H/C atomic ratio of the oil pitch is important and it is necessary that the H/C atomic ratio is from 0.6 to 0.8 for making

the non-graphitizable carbon material.

Though specific means for forming the oxygen bridge to these pitches are not limited, for example, the wet process by aqueous solutions such as nitric acid, mixed acid, sulfuric acid and hypochlorous acid, or the dry process by oxidizing gas (air, oxygen), further, reaction by solid reagents such as sulfur, ammonium nitrate, ammonium persulfate and iron chloride (II) are used.

Though the content rate of oxygen is not limited, as disclosed in Japanese Patent Laid-Open No. 3-252053, more than 3 % is preferable, further more than 5 % is more preferable. This content rate of oxygen has an effect on the structure of the carbon material finally produced; when the content rate of oxygen is within this range, it has the material parameters that the (002) surface interval as mentioned above is longer than 0.37 nm and there is no the exothermic peak at higher than 700 °C in the differential thermal analysis (DTA) in a current of air, whereby the capacity of the negative electrode is advanced.

The original raw materials are not limited to those as mentioned above, and it is possible to use any other organic materials, that is, any materials that become the non-graphitizable carbon material through the solid phase carbonizing process by the oxygen bridge treatment and so on.

Further, not only the non-graphitizable carbon material for which the organic materials as mentioned above are original raw materials but also the compounds in which phosphorus, oxygen and carbon are the main components as disclosed in Japanese Patent Laid-Open No. 3-137010 show the same material parameters as those of the non-graphitizable carbon material, and are preferable as the material of the negative electrode.

Though the non-graphitizable carbon material is obtained by carbonizing by burning the organic material as mentioned above and so on, it is preferable to burn according to the following process.

That is, in order to compose the non-graphitizable carbon material, after carbonizing the organic raw material at a temperature of from 300 °C to 700 °C, burning is executed under the condition that temperature raising speed is from 1 °C to 100 °C per minute, arrival temperature is from 900 °C to 1300 °C and retention time at the arrival temperature is from 0 to 300 hours. The carbonizing process may be omitted depending on the case. A sintered body obtained as mentioned above, after that, is ground, classified and provided to the negative electrode; the grinding may be executed before or after carbonization, calcination and thermal treatment at high temperature, and during the temperature raising process.

Next, as the graphite material, it is preferable that the actual density is more than 2.1 g/cm$^3$, more preferable, more than 2.18 g/cm$^3$. In order to obtain such actual density, the (002) surface interval measured by the X-ray diffraction method is preferably less than 0.340 nm, more preferably, 0.335 nm and less than 0.337 nm and it is necessary that the thickness of the C axis crystallite of the (002) surface is more than 14.0 nm.

Further, in the graphite material, characteristics such as volume density, mean form parameter x ave, specific surface area, distribution of degrees of grains and destructive strength of particle as well as the actual density and the parameters of the structure of crystals are important. These characteristics will be described as follows.

First, the volume density is measured according to the method described in JIS K-1469. The measuring method will be described as follows.

**Method for measuring volume density**

Incline a graduated measuring cylinder the mass of which has been previously measured and the volume of which is 100 cm$^3$, and enter gradually sample powders of 100 cm$^3$ into it by using a spoon. Measure the whole mass by 0.1 g of the minimum scale and find the mass M of the sample powders by subtracting the mass of the graduated measuring cylinder from the mass of it.

Next, cork the graduated measuring cylinder into which the sample powders are entered, and drop the graduated measuring cylinder from the height of about 5 cm to a rubber plate 50 times. As a result, as the sample powders in the graduated measuring cylinder are compressed, read the volume V of the compressed sample powders. Calculate volume specific gravity (g/cm$^3$) by the following expression 1.

$$D = M/V \qquad \text{Expression 1}$$

D : Volume Specific Gravity (g/cm$^3$)
M : Mass (g) of sample powders in a graduated measuring cylinder
V : Volume of sample powders in a graduated measuring cylinder after dropping 50 times

It is preferable that a graphite material the volume density of which is more than 0.4 g/cm$^3$ is used. As the form of the graphite is like scaly, it is easy to come off and it causes to shorten cycle life. However, if the volume density of the graphite material is more than 0.4 g/cm$^3$, it is possible to control come off and the cycle life is advanced. The

more preferable range of the volume density is more than 0.5 $g/cm^3$, further, more than 0.6 $g/cm^3$.

Next, the mean form parameter x ave is found as follows.

**Mean Form Parameter x ave : SEM Method**

That is, the representative particle form of the graphite material is a flat column or a rectangular parallelepiped as shown in a schematic view in Fig. 1 or 2. When the thickness of the thinnest part of the particle of the graphite is T, the longest length in the direction of a major axis is L and the length in the direction at right angles to the major axis corresponding to depth is W, the product of the values after L and W were divided by T, respectively, is the form parameter x as mentioned above. The smaller the form parameter x is, the higher the height to a bottom area is and the smaller the degree of flattening is.

$$x = (L/T) \times (W/T) \qquad \text{Expression 2}$$

x : Form Parameter
T : Thickness of the thinnest part of powder
L : Length in the direction of a major axis of the powder
W : Length in the direction at right angle to the major axis of the powder

In order to measure the form parameter x about the actual graphite powder, observe the form of the graphite powder by using SEM (a scanning type electronic microscope), and choose ten grains of which the length of the longest part is ± 30 % of the mean grain size. Calculate the form parameters of ten chosen grains by using Expression 2, respectively, and the mean of them. The calculated mean value is the mean form parameter x ave.

It is preferable that the mean form parameter x ave is less than 125. Using the graphite powder of low degree of flattening of which the mean form parameter x ave is less than 125, the structure of the electrode is advanced and it is hard to come off the graphite powder. Therefore, the cycle life is furthermore advanced. The preferable range of the mean form parameter x ave is from 2 to 115, more preferably, from 2 to 100.

Next, the specific surface area of the graphite powder is found by the nitrogen absorbing BET method, and is preferably less than 9 $m^2/g$. The cycle life of the cell is further improved by that the volume density and the mean form parameter x ave satisfy the condition as mentioned above and by using the graphite powder of which the specific surface area is less than 9 $m^2/g$.

Controlling of the specific surface area has an effect on the cycle life of the cell because the specific surface area corresponds to adhesion of a corpuscle to the graphite powder.

Namely, there are many cases that corpuscles the order of size of which is approximately sub-micron are adhered to the graphite powder; therefore, it is considered that adhesion of the corpuscles causes a low volume density of the graphite material. Therefore, it is preferable that the adhesion of the corpuscles to the graphite powder is as little as possible.

On one hand, if degree of grain is the same, the more the corpuscles adhere, the larger the specific surface area of the graphite powder is; on the other hand, the less the corpuscles adhere, the smaller the specific surface area of the graphite powder is. That is, that the specific surface area is controlled to less than 9 $m^2/g$ means that the adhesion of the corpuscles is very little; therefore, a high volume density and a long cycle life are obtained. The specific surface area is preferably less than 7 $m^2/g$, more preferably, less than 5 $m^2/g$.

The degrees of grains of the graphite powder is optimized by accumulation 10 grain size %, accumulation 50 grain size %, and accumulation 90 grain size % found by the distribution view of the degrees of grains. The accumulation 10 grain size %, the accumulation 50 grain size %, and the accumulation 90 grain size % mean the grain sizes when the area integrated from 0 μm becomes 10 %, 50 % and 90 % of the whole area in the distribution view of degrees of grains.

It is preferable that the accumulation 10 grain size % is larger than 3 μm, the accumulation 50 grain size % is larger than 10 μm, and the accumulation 90 grain size % is larger than 70 μm because of the following reason.

That is, in case of considering electrode filling characteristic, the distribution of degrees of grains of the graphite powder is the distribution that is wide in the direction of the horizontal axis (the grain size), particularly, it is possible to obtain high filling efficiency when the distribution is the normal distribution, and it is preferable.

However, heat might be generated in the cell in case of abnormal situation such as overcharging and so on; when the distribution volume of the graphite powder including the small sized grains is large in this case, the heat generating temperature tends to be high.

On one hand, as lithium ions are inserted into the graphite layers in charging the cell, the crystallite is expanded by about 10 %. The positive electrode and a separator are compressed by this expansion, and trouble at the beginning

such as an inner short is easy to occur in charging at the first time. The larger the distribution volume of the graphite powder including the large sized grains is, the more remarkable the badness due to such expansion is.

That is, in the graphite powder, if there are too many small sized grains or if there are too many large sized grains, it is inconvenient and it is preferable that from the small to the large size grains are balancedly combined.

The ranges of the accumulation 10, 50 and 90 grain size % as mentioned above are set considering these points, and the graphite powder satisfying this is balancedly combined from the small to the large sized grains. Therefore, there is control to generate heat in the cell in overcharging and so on, badness at the beginning is reduced and high reliability is secured. The accumulation 90 grain size % of them is preferably less than 60 μm from a viewpoint of preventing the badness at the beginning.

It is possible to measure the grain sizes and the number of grains, for example, by diffusion of laser beam by using a micro track grain size analyzer.

Next, destructive strength of the graphite powder is measured as follows.

**Method for measuring mean grain destructive strength**

Measuring of destructive strength is executed by using a Shimazu Minute Compression Test Apparatus (made by Shimazu Seisakusho Co., Ltd.; the Product Name is MCTM-500).

First, observe the graphite powder by an additional optical microscope, and choose 10 grains of which the length of the longest part is from ± 10 % of the mean grain size. Multiply load to 10 chosen grains, respectively, measure the destructive strength and calculate the mean value. The calculated mean value is the mean grain destructive strength of the graphite powder.

In order to obtain sufficient heavy loading characteristic as a cell used practically, it is preferable that the mean grain destructive strength of the graphite powder is more than 6.0 kg/mm$^2$. There is the following relation between the destructive strength and the loading characteristic.

First, the loading characteristic depends on easiness of moving of ions in discharging.

Here, when there are a lot of holes in the electrode material, electrolyte is easy to be impregnated in the electrode, therefore, the ions are easy to be moved and it is possible to obtain a good loading characteristic. As the ions are hard to be moved when there are few holes in the electrode material, the loading characteristic is inferior.

On one hand, in the high crystalline graphite material, hexagonal net surfaces of the graphite are developed in the direction of the crystal along the A axis, and crystallites in the direction of the C axis are formed by accumulation of them. The bond of hexagonal net surfaces of carbon is the weak bond named van der Waals force and it is easy to be deformed by stress. Therefore, the graphite material is easy to be crushed in filling it into the electrode by compression molding and it is hard to secure the holes.

The destructive strength as mentioned above is an index that the holes are hard to be crushed. If a graphite material of which the destructive strength is more than 6.0 kg/mm$^2$ is chosen, the holes are secured and it is possible to obtain a good loading characteristic.

Though the graphite material having property of matter as mentioned above is chosen and used, this graphite material may be both natural graphite and artificial graphite which is obtained by carbonizing the organic material and treating it at a high temperature.

In producing the artificial graphite, coal and pitch are representative as the organic material which is the original material.

Some pitch is obtained by distilling (vacuum distillation, atmospheric distillation, and steam distillation), thermally polymerizing/condensing, extracting, chemically polymerizing/condensing and so of coal tar, ethylene bottom oil, kinds of tar obtained by thermally decomposing crude oil and so on at a high temperature and asphalt and so on, and other is obtained in making reflux of lumber.

Further, as the original materials for the pitch, there are polyvinyl chloride resin, polyvinyl acetate, polyvinyl butyrate, 3,5-dimethyl phenol resin and so on.

These coal and pitch is liquid at the maximum temperature of about 400 °C during carbonizing. By maintaining at this temperature, aromatic rings are condensed with each other, made polycyclic, accumulated and oriented, then, at a temperature higher than about 500 °C, a precusor of solid carbon, that is, semicoke is made. Such process is called the liquid phase carbonizing process and is the representative producing process for graphitizing easily carbon.

Further, it is also possible to use condensed polycyclic hydrocarbon compounds of naphtalene, phenanthrene, anthracene, triphenylene, pyrene, perylene, pentaphene, pentacene and so on, other derivatives (for example, carboxylic acid, carboxylic anhydride, carboxylic imide and so on of them), or mixture, condensed heterocyclic compounds of acenaphthylene, indole, iso-indole, quinoline, isoquinoline, quinoxaline, phthaladine, carbazole, acridine, phenazine, phenantholyzine and so on, and derivatives of them as raw materials.

In order to make the artificial graphite, for example, the organic materials as mentioned above are carbonized in a current of an inert gas such as nitrogen at a temperature of from 300 °C to 700 °C, after that, are calcined under

the conditions that the temperature raising speed is from 1 °C to 100 °C per minute, arrival temperature is from 900 °C to 1500 °C, and maintaining time at the arrival temperature is from 0 to 30 hours in the current of inert gas, further, are thermally treated at a temperature higher than 2000 °C, more preferably, 2500 °C. It is needless to say that carbonization and calcination may be omitted depending on cases.

Though the graphite material made as mentioned above is classified, or crushed/classified, and provided to the negative electrode material, crushing may be executed before or after carbonizing and calcining, or during the temperature raising process before graphitizing. In these cases, thermal treatment is executed for graphitizing under the condition of the powder.

However, in order to obtain the graphite powder, volume density and destructive strength of which is high, it is preferable to mold the raw material and execute thermal treatment, and crush and classify the obtained graphitized molded body for black lead.

That is, in order to make the graphitized molded body, molding is executed by mixing coke which is filler and binder pitch which is molding agent or sintering agent. After executing the thermal treatment to the molded body at a low temperature of less than 1000 °C, the pitch impregnation/sintering process to impregnate the melted binder pitch is repeated several times, then, the thermal treatment is executed at the high temperature. The impregnated binder pitch is carbonized at the thermal treatment process as mentioned above and is graphitized. The obtained graphitized molded body is crushed for the graphite powder.

In the crushed powder of the graphitized molded body obtained as mentioned above, the volume density and the destructive strength is high and it is possible to obtain a high quality electrode.

Further, as filler (coke) and the binder pitch is used for the raw materials, graphitizing is executed as many crystalline, sulphur and nitrogen included in the raw materials occur as gas during the thermal treatment, therefore, micro holes are formed on its way. When the holes are formed, reaction of the negative electrode is enhanced, that is, it is easy to progress doping and dedoping reaction. Further, when there are the holes, there is also an advantage in that treatment efficiency is industrially high.

Further, as the raw material of the mold body, the filler having molding and sintering property may be used. In this case, it is not necessary to use the binder pitch.

As the negative electrode material, it is possible to use metal oxide possible to dope and dedope lithium ions as well as the carbon material.

As the metal oxide, oxide including transition metals is the preferable, and specifically iron oxide, ruthenium oxide, molybdenum oxide, tungsten oxide, titanium oxide, tin oxide, crystalline compounds, non-crystalline compounds are given. It is preferable to use materials whose charging/discharging potential is approximately that of metallic Li.

Next, the material of the positive electrode will be described.

It is preferable that the material of the positive electrode includes a sufficient amount of Li, for example, compounds of metal oxide including lithium and transition metals shown by, for example, a general chemical formula $LiMO_2$ (wherein, M means at least one of Co, Ni, Mn, Fe, Al, V and Ti) and layer phase compounds including Li and so on.

Particularly, in order to achieve high capacity, the positive electrode is necessary to include Li corresponding to the charged and discharged capacity more than 250 mAh per 1 g of the carbon material at the stationary state (for example, after repeating to charge and discharge about five times), and it is preferable to include Li corresponding to the charged and discharged capacity more than 300 mAh.

Li is not always supplied all from the positive electrode, that is, Li corresponding to the charged and discharged capacity more than 250 mAh per 1 g of the carbon material may be in the cell system. The amount of Li in the cell system is judged by measuring the discharged capacity of the cell.

## Examples

Embodiments of the present invention will be described according to the results of experiments.

### Structure of Cell Made

A structure of a cell made in each Example as mentioned below is shown in Fig. 3.

This non-aqueous electrolyte secondary cell, as shown in Fig. 3, is put in a cell can 5 under the condition that a negative electrode 1 in which negative electrode active material is applied to a current collecting body 10 of the negative electrode and a positive electrode 2 in which positive electrode active material is applied to a current collecting body 11 of the positive electrode are wound through a separator 3, and insulators 4 are installed on the upper and the lower part of the wound body.

A cell cap 7 is installed by being held through a sealing gasket 6 on the cell can 5 as mentioned above, they are electrically connected through the negative lead 12 and the positive lead 13 with the negative electrode 1 or the positive electrode 2, respectively, and are formed to function as the negative and the positive electrode of the cell.

In the cell according to the present invention, the positive electrode lead 13 is welded to a thin plate 8 for shielding an electric current, and is connected electrically through the thin plate 8 for shielding the electric current and a heat sensitive resistance element (PTC element) 9 with the cell cap 7.

In the cell having the structure as mentioned above, when pressure in the cell is up, the thin plate 8 for shielding the electric current is pushed up and deformed. Then, the positive electrode lead 13 is cut except a part welded to the thin plate 8 for shielding the electric current, and the electric current is shielded.

**Example 1**

First, negative electrode active material was composed as follows.

30 weight parts of coal tar class pitch which was a binder was added to 100 weight parts of coal class coke which was filler; after mixing them at the temperature of about 100 °C, a precursor of a molded body of carbon was obtained by compression molding by a press.

Next, the molded body of carbon material was made by executing thermal treatment to the precursor at a temperature lower than 1000 °C. The pitch impregnating/calcinating process in which binder pitch melted at a temperature lower than 200 °C was impregnated to the molded body of the carbon material and thermal treatment was executed at a temperature lower than 1000 °C was repeatedly performed.

After that, a graphitized molded body was made by executing a thermal treatment to the molded body of carbon at the temperature of 2700 °C under inactive atmosphere, and graphite sample powder is made by crushing and classifying it.

Material values of the graphite material obtained then are as follows.

Surface Interval of (002) Surface : 0.337 nm
Thickness of Crystallite in the Direction of C Axis of (002) Surface : 50.0 nm
Actual Density : 2.23 g/cm$^3$
Volume Density : 0.83 g/cm$^3$
Mean Form Parameter X ave : 10
Specific Surface Area : 4.4 m$^2$/g
Degree of Grain :

Mean Grain Size : 31.2 µm
Accumulation 10 grain size % : 12.3 µm
Accumulation 50 grain size % : 29.5 µm
Accumulation 90 grain size % : 53.7 µm
Mean Value of Destructive Strength of Grain : 7.1 kg/mm$^2$

The surface interval of the (002) surface and the thickness of the crystallite in the direction of the C Axis of the (002) surface were measured by X-ray diffraction measuring method, the actual density was measured by the pycnometer method, the specific surface area was measured by the BET method, and the degree of grains were measured by the distribution of the grain sizes by the laser diffraction method, respectively.

A negative electrode 1 is made as the graphite sample powder obtained as mentioned above was the negative electrode active material.

First, the negative electrode binding agent was prepared by mixing 90 weight parts of the graphite sample powder with 10 weight parts of polyvinylidene fluoride (PVDF) as binding agent, and negative electrode binding agent slurry (paste) was prepared by dispersing it with N-methylpyrrolidone which was a solvent.

Next, a belt type copper film which was 10 µm thick was prepared as a negative electrode current collecting body 10; after uniformly applying and drying the negative electrode binding agent slurry as mentioned above on both surfaces of the negative electrode current collecting body 10, the belt type negative electrode 1 was made by compression molding at the fixed pressure.

On one hand, positive electrode active material was made as follows.

0.5 mol of lithium carbonate is mixed with 1 mol of cobalt carbonate, and the mixture of them was calcinated in air at the temperature of 900 °C for five hours. X-ray diffraction measuring was executed to the obtained material. A result was properly agreed with the peak of $LiCoO_2$ registered in the JCPDS file.

By crushing $LiCoO_2$, powder of $LiCoO_2$ of which accumulation 50 grain size % obtained by the laser diffraction method was 15 µm was obtained.

Further, 95 weight parts of $LiCoO_2$ powder were mixed with 5 weight parts of lithium carbonate powder, the positive electrode binding agent was prepared by mixing 91 weight parts of them with 6 weight parts of scaly graphite

as conductive agent with 3 weight parts of polyvinylidene fluoride as the binder, and the positive electrode binding agent slurry (paste) was prepared by dispersing it with N-methylpyrrolidone.

Next, a belt type copper film which was 20 µm thick was prepared as a positive electrode current collecting body 11, after uniformly applying the positive electrode binding agent slurry as mentioned above on both surfaces of the positive electrode current collecting body 11 and drying it; the belt type positive electrode 2 was made by compression molding.

The belt type negative electrode 1 and the belt type positive electrode 2 made as mentioned above, as shown in Fig. 3, were wound many times after accumulating the negative electrode 1, a separator 3, the positive electrode 2 and separator 3 in order through the separators which are formed by polypropylene film having many minute holes which were 25 µm thick as shown in Fig. 3, and a whirlpool type electrode body the outer diameter of which was 18 mm was made.

The whirlpool type electrode body made as mentioned above was put in a cell can 5 made by iron plated with nickel.

An insulating plate 4 is installed on both the upper and the lower surface of the whirlpool type electrode, and a positive electrode lead 13 made of aluminum was protruded from the positive electrode electric current collecting body 11 and welded to the thin plate for shielding the electric current, and a negative electrode lead 12 made of aluminum was protruded from the negative electrode electric current collecting body 10 and welded to the cell can 5.

On one hand, electrolyte was prepared by adding a hologenated monomethoxy benzene class compound to the solvent in which ethylene carbonate was mixed with dimethyl carbonate by the equal volume at the concentration of 0.05 M, and by dissolving LiPF6 at the concentration of 1 mol/l. Then the electrolyte was poured into the cell can 5. The monomethoxy benzene class compound used here was shown by Chemical Formula 4.

**Formula 4**

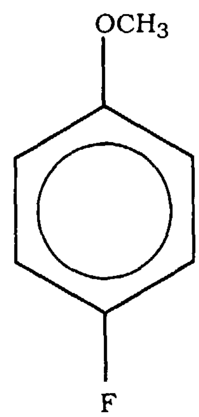

Next, by holding the cell can 5 through the shielded sealing gasket 6 to the surface of which asphalt was applied, a safety valve apparatus 8 having a current shielding mechanism, PTC element 9 and the cell cap 7 were fixed, air tightness was maintained in the cell and a cylindrical non-aqueous electrolyte secondary cell the diameter of which was 18 mm and which was 65 mm high was obtained.

## Examples 2 through 8

A non-aqueous electrolyte secondary cell was made similarly to Example 1 except that compounds as shown by Chemical Formulas 5 through 12 as monomethoxy benzene class compounds were added to the electrolyte.

**Formula 5**

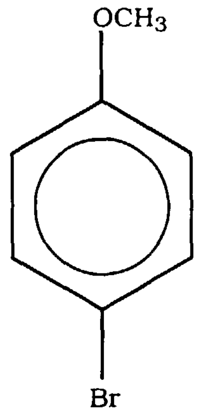

**Formula 6**

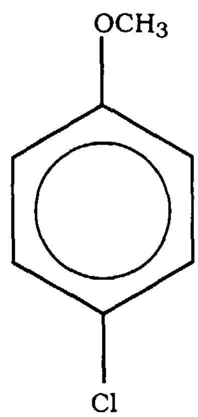

**Formula 7**

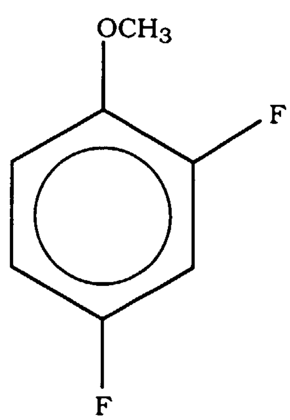

**Formula 8**

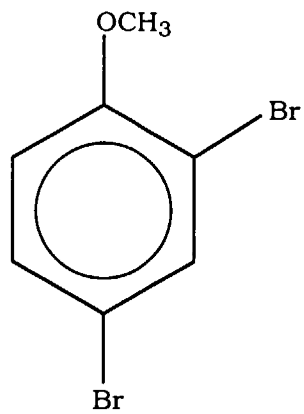

**Formula 9**

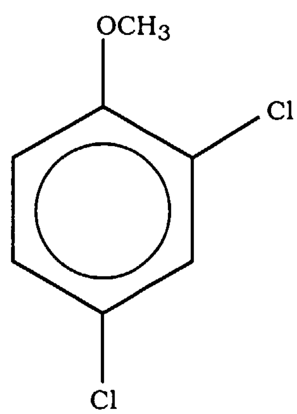

**Formula 10**

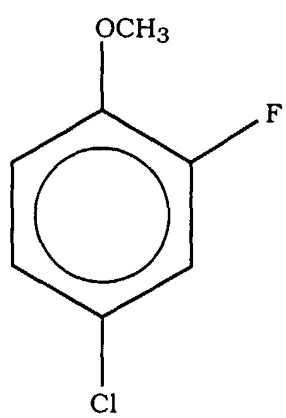

**Formula 11**

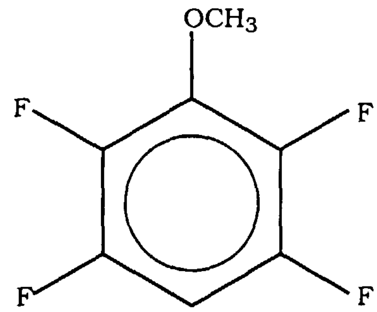

**Comparative Example 1**

A non-aqueous electrolyte secondary cell was made similarly to Example 1 except not adding monomethoxy benzene class compounds to electrolyte.

Charging/discharging efficiency and capacity maintenance factor before and after preservating were measured by charging and discharging the cell made as mentioned above.

Charging and discharging were executed under the conditions of discharging to the stop voltage 2.75 V by the fixed current 0.5 A after charging for 4 hours at the constant electronic current 0.5 A and the maximum voltage 4.2 V.

The cell was preserved at 23 °C for one month in measuring the capacity maintenance factor.

The charging/discharging efficiency and the capacity maintenance factor were found according to the following expressions.

Charging/Discharging Efficiency (%) = (Discharged Capacity/Charged Capacity) x 100

Capacity Maintenance Factor (%) = (Capacity After Preserving/Capacity Before Preserving) x 100

The measured charged capacity, the charging/discharging efficiency and the capacity maintenance factor are shown in Table 1.

Table 1

| | Additional Compounds | Addition (M) |
|---|---|---|
| Example 1 | Chemical Formula 4 | 0.05 |
| Example 2 | Chemical Formula 5 | 0.05 |
| Example 3 | Chemical Formula 6 | 0.05 |
| Example 4 | Chemical Formula 7 | 0.05 |
| Example 5 | Chemical Formula 8 | 0.05 |
| Example 6 | Chemical Formula 9 | 0.05 |
| Example 7 | Chemical Formula 10 | 0.05 |
| Example 8 | Chemical Formula 11 | 0.05 |
| Comparative Example 1 | Nothing | 0 |

| | Before preserving for one month at 23 °C | | Capacity Maintenance Factor after preservating for one month at 23 °C (%) |
|---|---|---|---|
| | Capacity (mAh) | Charging/Discharging Efficiency (%) | |
| Example 1 | 1532 | 90 | 94 |
| Example 2 | 1530 | 88 | 92 |
| Example 3 | 1533 | 90 | 93 |
| Example 4 | 1526 | 89 | 92 |
| Example 5 | 1528 | 88 | 92 |
| Example 6 | 1531 | 90 | 93 |
| Example 7 | 1527 | 89 | 92 |
| Example 8 | 1534 | 91 | 94 |
| Comparative Example 1 | 1510 | 86 | 88 |

As shown in Table 1, in any of the cells in Examples 1 through 8 where the monomethoxy benzene class compounds are added to the electrolyte, the capacity, the charging/discharging efficiency and the capacity maintenance factor are larger than those of the cell in Comparative Example 1 where the monomethoxy benzene class compounds are not added to the electrolyte.

Therefore, it is understood that when the monomethoxy benzene class compounds are added to the electrolyte, performance of the cell is improved, because it is considered that the monomethoxy benzene class compounds added to the electrolyte have an effect on preventing irreversible reaction of the electrode caused during charging.

**Examination of Addition of Monomethoxy Benzene Class Compounds**

A non-aqueous electrolyte secondary cell was made similarly to Example 1 except by using the compounds as shown in Chemical Formula 4 or 7 as the monomethoxy benzene class compounds for the electrolyte and changing the addition as shown in Table 2 (Experimental Examples 1 through 11).

The capacity, the charging/discharging efficiency and the capacity maintenance factor of the cell made as mentioned above were similarly measured. The result is shown in Table 2 with the kinds and the addition of the monomethoxy benzene class compounds. Further, the relation between the addition and capacity of these compounds is shown in Fig. 4, the relation between the addition and the charging/discharging efficiency is shown in Fig. 5 and the relation between the addition and the capacity maintenance factor is shown in Fig. 6.

In order to compare, a non-aqueous electrolyte secondary cell was made by using 1,2-dimethoxy-4-fluorobenzene or 1,4-dimethoxy-2-fluorobenzene except monomethoxy benzene (Comparative Experimental Examples 1 through 8). The capacity, the charging/discharging efficiency and the capacity maintenance factor were measured. The results are shown with the addition of the compounds in Table 2. Further, the relation between the addition and the capacity of these compounds is shown in Fig. 4, the relation between the addition and the charging/discharging efficiency of the compounds is shown in Fig. 5 and the relation between the addition and the capacity maintenance factor of the compounds is shown in Fig. 6.

Table 2

| | Additional Compounds | Addition (M) |
|---|---|---|
| Experimental Example 1 | Chemical Formula 4 | 0.02 |
| Experimental Example 2 | Chemical Formula 4 | 0.05 |
| Experimental Example 3 | Chemical Formula 4 | 0.10 |
| Experimental Example 4 | Chemical Formula 4 | 0.30 |
| Experimental Example 5 | Chemical Formula 4 | 0.50 |
| Experimental Example 6 | Chemical Formula 4 | 0.80 |

Table 2 (continued)

| | Additional Compounds | Addition (M) |
|---|---|---|
| Experimental Example 7 | Chemical Formula 7 | 0.05 |
| Experimental Example 8 | Chemical Formula 7 | 0.10 |
| Experimental Example 9 | Chemical Formula 7 | 0.30 |
| Experimental Example 10 | Chemical Formula 7 | 0.60 |
| Experimental Example 11 | Chemical Formula 7 | 1.00 |
| Experimental Comparative Example 1 | 1,2-dimethoxy-4-fluorobenzene | 0.1 |
| Experimental Comparative Example 2 | 1,2-dimethoxy-4-fluorobenzene | 0.3 |
| Experimental Comparative Example 3 | 1,2-dimethoxy-4-fluorobenzene | 0.5 |
| Experimental Comparative Example 4 | 1,2-dimethoxy-4-fluorobenzene | 0.8 |
| Experimental Comparative Example 5 | 1,4-dimethoxy-2-fluorobenzene | 0.1 |
| Comparative Experimental Example 6 | 1,4-dimethoxy-2-fluorobenzene | 0.3 |
| Experimental Comparative Example 7 | 1,4-dimethoxy-2-fluorobenzene | 0.5 |
| Experimental Comparative Example 8 | 1,4-dimethoxy-2-fluorobenzene | 0.8 |

| | Before preserving for one month at 23 °C | | Capacity Maintenance Factor after preservating for one month at 23 °C (%) |
|---|---|---|---|
| | Capacity (mAh) | Charging/Discharging Efficiency (%) | |
| Experimental Example 1 | 1525 | 89 | 92 |
| Experimental Example 2 | 1532 | 90 | 94 |
| Experimental Example 3 | 1534 | 90 | 93 |
| Experimental Example 4 | 1537 | 88 | 93 |
| Experimental Example 5 | 1531 | 87 | 91 |
| Experimental Example 6 | 1523 | 86 | 90 |
| Experimental Example 7 | 1526 | 89 | 92 |
| Experimental Example 8 | 1535 | 91 | 95 |
| Experimental Example 9 | 1541 | 91 | 93 |
| Experimental Example 10 | 1526 | 89 | 92 |
| Experimental Example 11 | 1520 | 87 | 92 |
| Experimental Comparative Example 1 | 1515 | 87 | 89 |
| Experimental Comparative Example 2 | 1513 | 86 | 89 |
| Experimental Comparative Example 3 | 1510 | 84 | 88 |
| Experimental Comparative Example 4 | 1506 | 83 | 88 |
| Experimental Comparative Example 5 | 1513 | 86 | 89 |

(continued)

| | Before preserving for one month at 23 °C | | Capacity Maintenance Factor after preservating for one month at 23 °C (%) |
|---|---|---|---|
| | Capacity (mAh) | Charging/Discharging Efficiency (%) | |
| Experimental Comparative Example 6 | 1512 | 85 | 88 |
| Experimental Comparative Example 7 | 1511 | 85 | 87 |
| Experimental Comparative Example 8 | 1505 | 84 | 87 |

Seeing the case of adding the monomethoxy benzene class compounds to the electrolyte in Fig. 4 through 6, it is understood that the characteristic values are changed depending on the addition. That is, these characteristic values are increased depending on increasing of the addition up to some value and are decreased depending on increasing of the addition after some value.

When the addition of the monomethoxy benzene class compounds is within the range from 0.005 to 0.9 M, further, from 0.005 to 0.5 M, it is possible to obtain the superior characteristic comparing to the case that the monomethoxy benzene class compounds are not added. Thus, it is understood that the addition of the monomethoxy benzene class compounds may be within the range from 0.005 to 0.9 M, more preferably, from 0.005 to 0.5 M.

Here, in order to compare, the characteristic of the case that 1,2-dimethoxy-4-fluorobenzene or 1,4-dimethoxy-2-fluorobenzene is added to the electrolyte is also evaluated. In this case, though the characteristic is barely advanced by adding a very small amount of these compounds, the characteristic is degraded rather than before. Therefore, it is understood that 1,2-dimethoxy-4-fluorobenzene or 1,4-dimethoxy-2-fluorobenzene are not suitable for the addition for adding to the electrolyte.

## Claims

1. A non-aqueous electrolyte secondary cell comprising:

   a negative electrode that is capable to dope and dedope lithium, a positive electrode and a non-aqueous electrolyte said electrolyte being dissolved in a non-aqueous solvent, wherein at least one of the monomethoxy benzene class compounds as shown by chemical formulas 1, 2 and 3 are added to said non-aqueous electrolyte at a concentration from 0.005 M to 0.9 M.

**Formula 1**

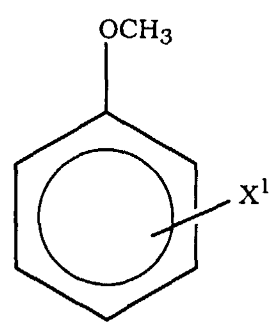

where $X^1$ is a halogen element

**Formula 2**

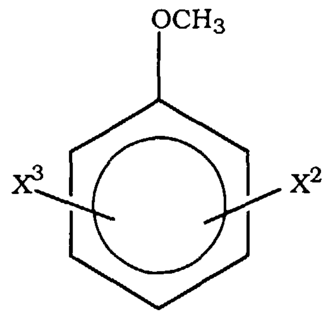

where $X^2$ and $X^3$ are halogen elements

**Formula 3**

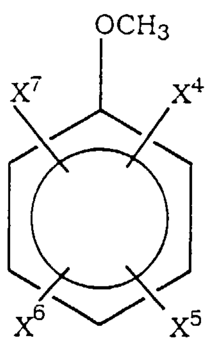

where $X^4$, $X^5$, $X^6$ and $X^7$ are halogen elements

**2.** A non-aqueous electrolyte secondary cell according to claim 1, wherein said positive electrode comprises a lithium transition metal composite oxide as shown by the formula $LiMO_2$, where M is at least one member of the group consisting of Co, Ni, Mn, Fe, Al, V and Ti.

**3.** A non-aqueous electrolyte secondary cell according to claim 1, wherein said negative electrode comprises carbon material.

**4.** A non-aqueous electrolyte secondary cell according to claim 3, wherein said carbon material is graphite material or non-graphitizable carbon material.

**5.** A non-aqueous electrolyte secondary cell according to claim 4, wherein said graphite material has an actual density of more than 2.1 g/cm$^3$, a surface interval of the (002) surface of from 0.335 to 0.337 nm, and a thickness of the crystallite in the direction of the C axis of the (002) surface of more than 14.0 nm.

**6.** A non-aqueous electrolyte secondary cell according to claim 4, wherein said non-graphitizable carbon material has a surface interval of the (002) surface of more than 0.37 nm, and an actual density of less than 1.70 g/cm$^3$ and does not have an exothermic peak higher than 700° C in differential thermal analysis in air.

**7.** A non-aqueous electrolyte secondary cell according to claim 1, wherein said negative electrode comprises a crystalline or non-crystalline metallic chalcogenide.

8. A non-aqueous electrolyte secondary cell according to claim 1, wherein the electrolyte comprises a lithium salt dissolved in a non-aqueous solvent comprising at least either a high permittivity solvent or a low viscosity solvent.

9. A non-aqueous electrolyte secondary cell according to claim 8, wherein the high permittivity solvent is at least one compound selected from the group consisting of ethylene carbonate, propylene carbonate, butylene carbonate, vinylene carbonate, sulfolane, γ-butyrolactone and valerolactone.

10. A non-aqueous electrolyte secondary cell according to claim 8, wherein said low viscosity solvent is at least one compound selected from the group consisting of diethyl carbonate, dimethyl carbonate, methyl ethyl carbonate, methyl propyl carbonate, methyl propionate, ethyl proprionate, trimethyl phosphate, and triethyl phosphate.

**Patentansprüche**

1. Sekundärbatterie mit nicht-wässrigem Elektrolyten, umfassend:

eine negative Elektrode, welche mit Lithium dotiert und wieder entdotiert werden kann, eine positive Elektrode sowie einen nicht-wässrigen Elektrolyten, wobei der Elektrolyt in einem nicht-wässrigen Lösungsmittel gelöst ist, wobei zumindest eine Verbindung aus der Klasse der Monomethoxybenzole, die durch die chemischen Formeln 1, 2 und 3 dargestellt sind, dem nicht-wässrigen Elektrolyten in einer Konzentration von 0,005 M bis 0.9 M beigegeben ist.

**Formel 1**

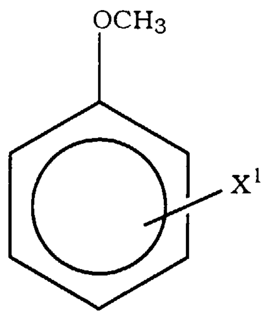

wobei $X^1$ ein Halogenelement bedeutet.

**Formel 2**

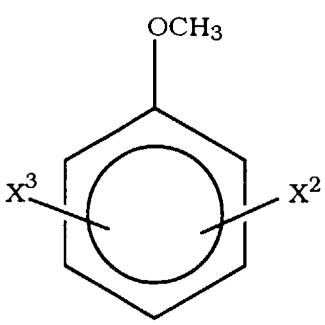

wobei $X^2$ and $X^3$ ein Halogenelement bedeuten.

**Formel 3**

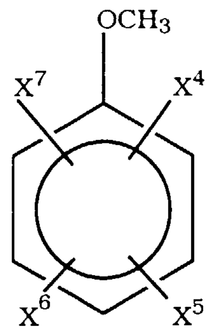

wobei $X^4$, $X^5$, $X^6$ and $X^7$ Halogenelemente bedeuten.

2. Sekundärbatterie mit nicht-wässrigem Elektrolyten nach Anspruch 1, wobei die positive Elektrode ein zusammengesetztes Oxid von Lithium und einem Übergangsmetall enthält, das durch die Formel $LiMO_2$ dargestellt wird, wobei M zumindest ein Mitglied der Gruppe ist, die von Co, Ni, Mn, Fe, Al, V und Ti gebildet wird.

3. Sekundärbatterie mit nicht-wässrigem Elektrolyten nach Anspruch 1, wobei die negative Elektrode ein Kohlenstoffmaterial umfasst.

4. Sekundärbatterie mit nicht-wässrigem Elektrolyten nach Anspruch 3, wobei das Kohlenstoffmaterial Graphit oder ein nicht in Graphit überführbares Kohlenstoffmaterial ist.

5. Sekundärbatterie mit nicht-wässrigem Elektrolyten nach Anspruch 4, wobei das Graphitmaterial eine tatsächliche Dichte von mehr als 2,1 g/cm$^3$, einen Flächenabstand der (002)-Fläche von 0,335 bis 0,337 nm und eine Stärke der Kristallite in Richtung der C-Achse der (002)-Fläche von mehr als 14,0 nm aufweist.

6. Sekundärbatterie mit nicht-wässrigem Elektrolyten nach Anspruch 4, wobei das nicht in Graphit überführbare Kohlenstoffmaterial einen Flächenabstand der (002)-Fläche von mehr als 0,37 nm aufweist, eine tatsächliche Dichte von weniger als 1,70 g/cm$^3$ und bei der Differentialthermoanalyse in Luft oberhalb von 700 °C keinen exothermen Peak aufweist.

7. Sekundärbatterie mit nicht-wässrigem Elektrolyten nach Anspruch 1, wobei die negative Elektrode ein kristallines oder nicht-kristallines Metallchalkogenid umfasst.

8. Sekundärbatterie mit nicht-wässrigem Elektrolyten nach Anspruch 1, wobei der Elektrolyt ein Lithiumsalz umfasst, das in einem nicht-wässrigen Lösungsmittel gelöst ist, das zumindest ein Lösungsmittel mit hoher absoluter Dielektrizitätskonstante oder ein Lösungsmittel mit niedriger Viskosität umfasst.

9. Sekundärbatterie mit nicht-wässrigem Elektrolyten nach Anspruch 8, wobei das Lösungsmittel mit hoher absoluter Dielektrizitätskonstante zumindest eine Verbindung ist, die ausgewählt ist aus der Gruppe, die gebildet wird von Ethylencarbonat, Propylencarbonat, Butylencarbonat, Vinylencarbonat, Sulfolan, γ-Butyrolacton und Valerolacton.

10. Sekundärbatterie mit nicht-wässrigem Elektrolyten nach Anspruch 8, wobei das Lösungsmittel mit niederer Viskosität zumindest eine Verbindung ist, die ausgewählt ist aus der Gruppe, die gebildet wird von Diethylcarbonat, Dimethylcarbonat, Methylpropylcarbonat, Methylpropionat, Ethylpropionat, Trimethylpropionat und Triethylphosphat.

**Revendications**

1. Accumulateur secondaire à électrolyte non aqueux comprenant :

une électrode négative qui est capable de doper et de dédoper du lithium, une électrode positive et un électrolyte non aqueux, ledit électrolyte étant dissous dans un solvant non aqueux, dans lequel au moins un des composés de la classe du monométhoxybenzène comme représenté par les formules chimiques 1, 2 et 3 est ajouté audit électrolyte non aqueux à une concentration de 0,005 M à 0,9 M.

Formule 1

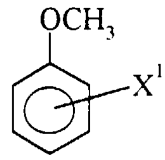

dans laquelle $X^1$ est un élément d'halogène,

Formule 2

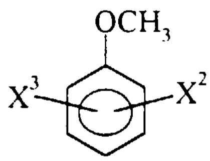

dans laquelle $X^2$ et $X^3$ sont des éléments d'halogènes,

Formule 3

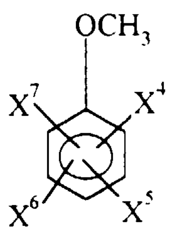

dans laquelle $X^4$, $X^5$, $X^6$ et $X^7$ sont des éléments d'halogènes,

**2.** Accumulateur secondaire à électrolyte non aqueux selon la revendication 1, dans lequel ladite électrode positive comprend un oxyde composite de lithium et de métal de transition comme représenté par la formule $LiMO_2$, où M est au moins un élément parmi Co, Ni, Nn, Fe, Al, V et Ti.

**3.** Accumulateur secondaire à électrolyte non aqueux selon la revendication 1, dans lequel ladite électrode négative comprend une matière carbonée.

**4.** Accumulateur secondaire à électrolyte non aqueux selon la revendication 3, dans lequel ladite matière carbonée est une matière de graphite ou une matière carbonée non graphitisable.

**5.** Accumulateur secondaire à électrolyte non aqueux selon la revendication 4, dans lequel ladite matière de graphite

présente une densité réelle supérieure à 2,1 g/cm$^3$, un intervalle de surface de la surface (002) compris entre 0,335 et 0,337 nm et une épaisseur du cristallite dans la direction de l'axe C de la surface (002) supérieure à 14,0 nm.

**6.** Accumulateur secondaire à électrolyte non aqueux selon la revendication 4, dans lequel ladite matière carbonée non graphitisable présente un intervalle de surface de la surface (002) supérieur à 0,37 nm et une densité réelle inférieure à 1,70 g/cm$^3$ et ne présente pas un pic exothermique supérieur à 700°C dans une analyse thermique différentielle dans l'air.

**7.** Accumulateur secondaire à électrolyte non aqueux selon la revendication 1, dans lequel ladite électrode négative comprend un chalcogénure métallique cristallin ou non cristallin.

**8.** Accumulateur secondaire à électrolyte non aqueux selon la revendication 1, dans lequel l'électrolyte comprend un sel de lithium dissous dans un solvant non aqueux comprenant au moins un solvant de permittivité élevée ou un solvant de faible viscosité.

**9.** Accumulateur secondaire à électrolyte non aqueux selon la revendication 8, dans lequel le solvant de permittivité élevée est au moins un composé choisi parmi le carbonate d'éthylène, le carbonate de propylène, le carbonate de butylène, le carbonate de vinylène, le sulfolane, la γ-butyrolactone et la valérolactone.

**10.** Accumulateur secondaire à électrolyte non aqueux selon la revendication 8, dans lequel ledit solvant de faible viscosité est au moins un composé choisi parmi le carbonate de diéthyle, le carbonate de diméthyle, le carbonate de méthyléthyle, le carbonate de méthylpropyle, le propionate de méthyle, le propionate d'éthyle, le phosphate de triméthyle et le phosphate de triéthyle.

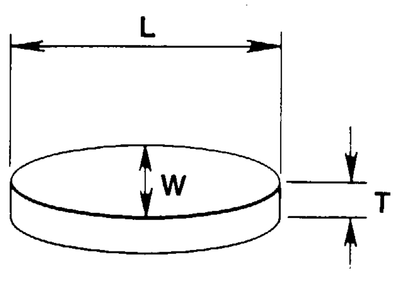


FIG.1

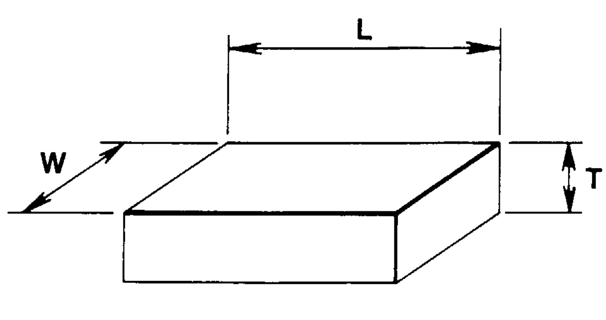


FIG.2

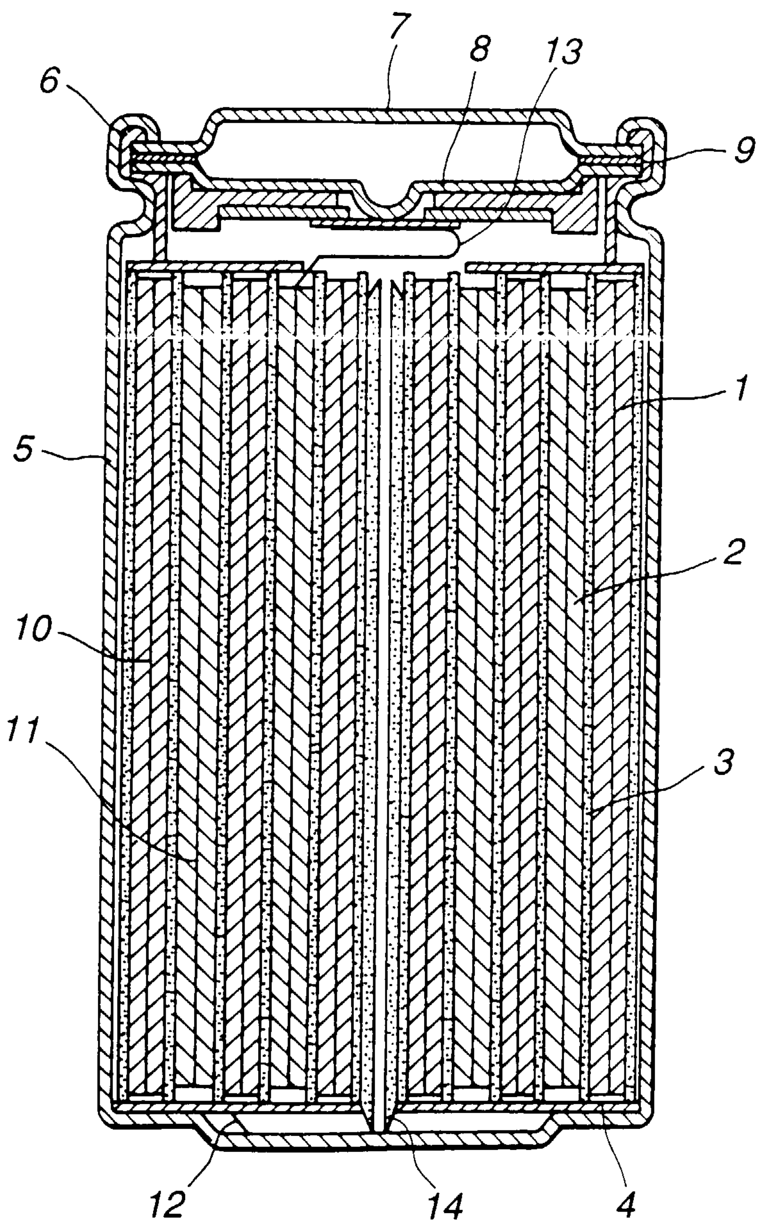


FIG.3

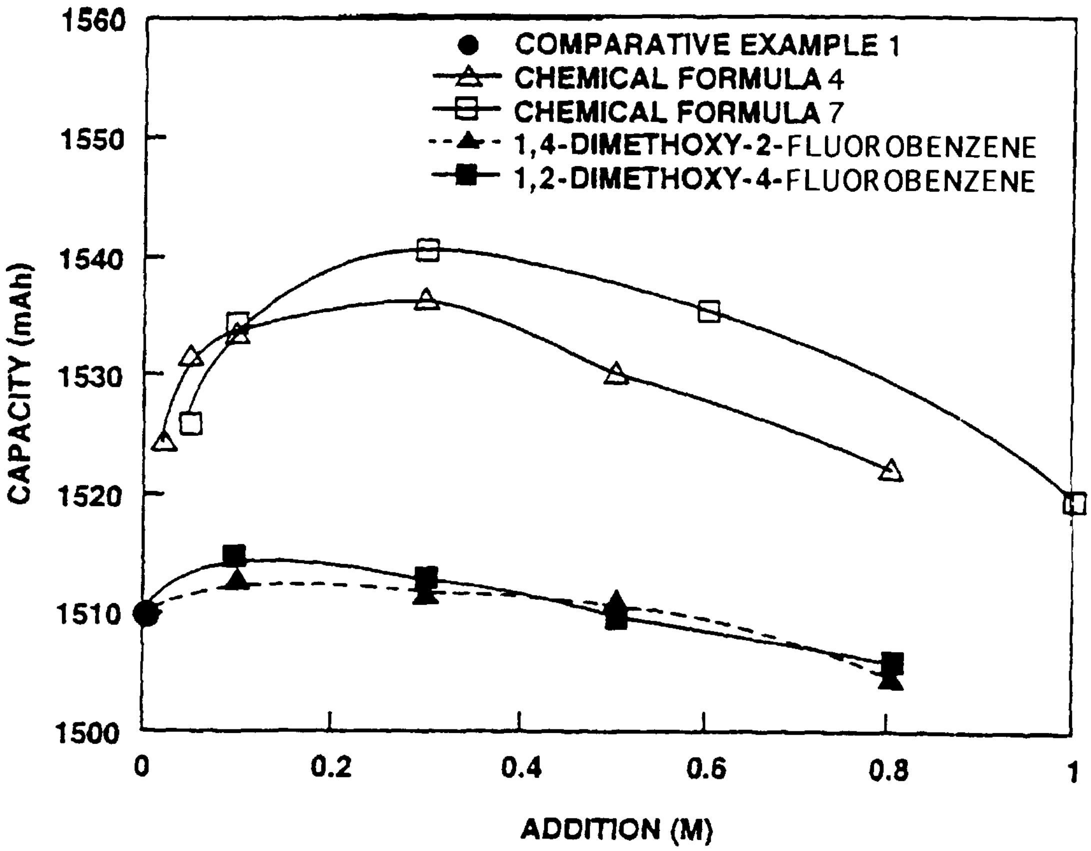
1560
1550
1540
1530
1520
1510
1500
CAPACITY (mAh)
0
0.2
0.4
0.6
0.8
1
ADDITION (M)
COMPARATIVE EXAMPLE 1
CHEMICAL FORMULA 4
CHEMICAL FORMULA 7
1,4-DIMETHOXY-2-FLUOROBENZENE
1,2-DIMETHOXY-4-FLUOROBENZENE

FIG.4

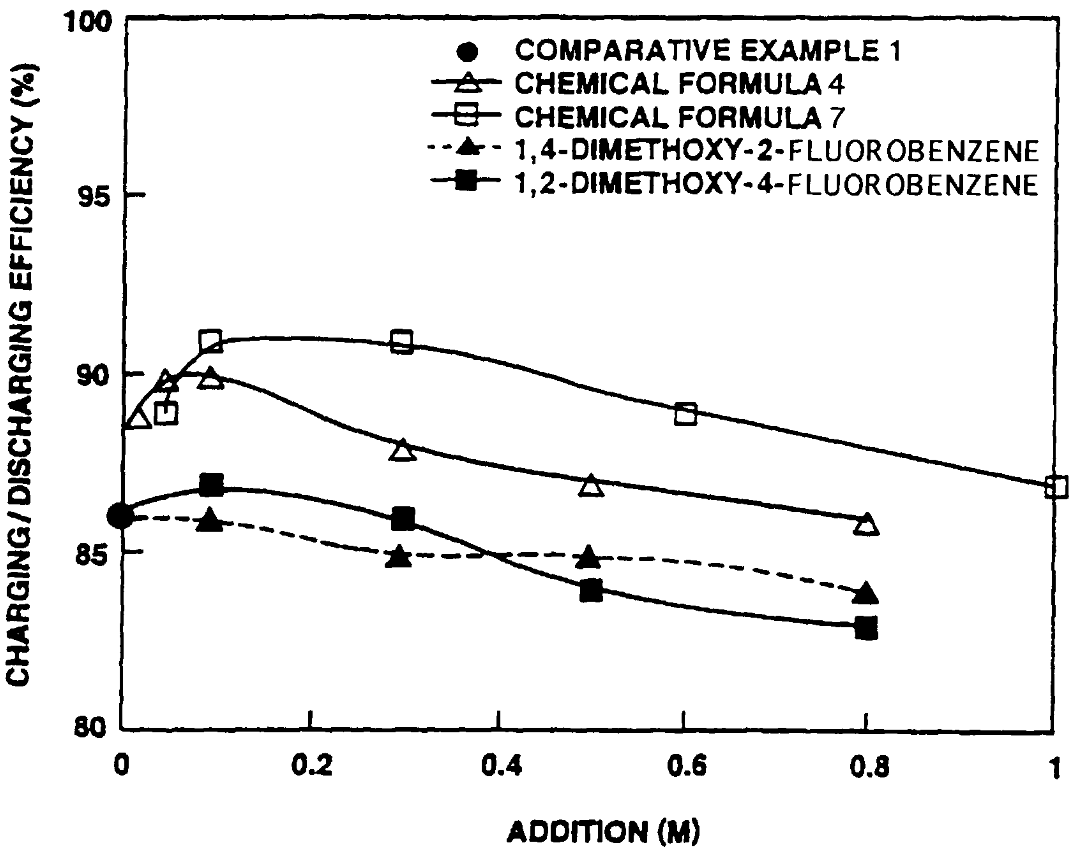
100
95
90
85
80
CHARGING / DISCHARGING EFFICIENCY (%)
COMPARATIVE EXAMPLE 1
CHEMICAL FORMULA 4
CHEMICAL FORMULA 7
1,4-DIMETHOXY-2-FLUOROBENZENE
1,2-DIMETHOXY-4-FLUOROBENZENE
0
0.2
0.4
0.6
0.8
1
ADDITION (M)

FIG.5

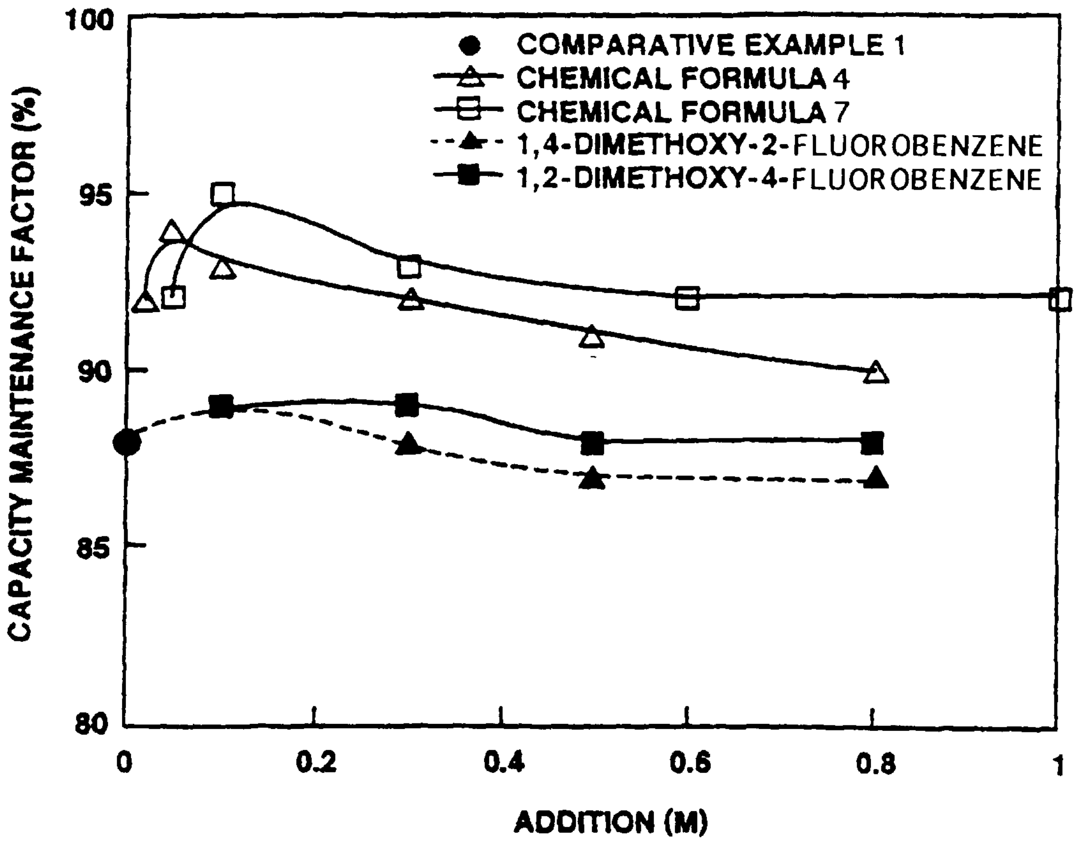
100
95
90
85
80
CAPACITY MAINTENANCE FACTOR (%)
COMPARATIVE EXAMPLE 1
CHEMICAL FORMULA 4
CHEMICAL FORMULA 7
1,4-DIMETHOXY-2-FLUOROBENZENE
1,2-DIMETHOXY-4-FLUOROBENZENE
0
0.2
0.4
0.6
0.8
1
ADDITION (M)

FIG.6